Europäisches Patentamt

European Patent Office

Office européen des brevets

(19)

(11) Veröffentlichungsnummer : **0 157 246
B1**

(12)                    **EUROPÄISCHE PATENTSCHRIFT**

(45) Veröffentlichungstag der Patentschrift :
04.03.87

(21) Anmeldenummer : 85102927.2

(22) Anmeldetag : 14.03.85

(51) Int. Cl.⁴ : **B 65 G 45/00**

(54) **Abstreifvorrichtung für Förderbänder.**

(30) Priorität : 19.03.84 DE 3410046

(43) Veröffentlichungstag der Anmeldung :
09.10.85 Patentblatt 85/41

(45) Bekanntmachung des Hinweises auf die Patenterteilung : 04.03.87 Patentblatt 87/10

(84) Benannte Vertragsstaaten :
BE DE FR GB

(56) Entgegenhaltungen :
DE-A- 2 012 542
DE-B- 1 051 725
GB-A- 1 137 100
WILA VERLAG FÜR WIRTSCHAFTSWERBUNG WIL-
HELM LAMPL, München: "Auszüge aus den
Gebrauchsmustern!, 20. Jahrgang, Heft 1, 5. Januar
1983, Seite 26

(73) Patentinhaber : Jakobs, Hartmut, Dipl.-Kfm.
Eifelstrasse 47
D-4350 Recklinghausen (DE)

(72) Erfinder : Jakobs, Hartmut, Dipl.-Kfm.
Eifelstrasse 47
D-4350 Recklinghausen (DE)

(74) Vertreter : Rieder, Hans-Joachim, Dr.
Corneliusstrasse 45 Postfach 11 04 51
D-5600 Wuppertal 11 (DE)

## Beschreibung

Die Erfindung betrifft eine Abstreifvorrichtung für Förderbänder, mit einem sich in Richtung der Breite des Förderbandes erstreckenden Abstreifer, der an in Längsrichtung des Förderbandes verlaufenden Armen sitzt, die gegen die Unterseite des Förderbandes nachstellbar sind, wobei jeder Arm von einem Paket schuppenartig übereinanderliegender Blattfedern unterschiedlicher Länge gebildet ist, von denen die längste, dem Förderband zugekehrt liegende Blattfeder mit ihrem Endbereich den Haltebock für den Abstreifer trägt und zusammen mit den restlichen Blattfedern von einem Träger ausgeht, der durch Drehen einer Welle verschwenkt.

Eine derartige Abstreifvorrichtung ist bekannt aus dem DE-GM-8 227 795. Das Einstellen des Anpreßdruckes der Abstreiferlippe am Förderband geschieht mittels einer auf einer Verstellspindel laufenden Verstellmutter, bei deren Verstellung zwangsläufig die Welle mit dem Träger verschwenkt. Der Anpreßdruck wird dabei empirisch ermittelt.

Dem Gegenstand der Erfindung liegt die Aufgabe zugrunde, eine Abstreifvorrichtung der vorausgesetzten Art in herstellungstechnisch einfacher Weise gebrauchsvorteilhafter auszugestalten derart, daß der Anpreßdruck des Abstreifers kurzfristig einstellbar ist.

Gelöst wird diese Aufgabe dadurch, daß zwischen der mit einer Skalenplatte ausgestatteten Welle und dem relativ zur Welle drehbaren Träger eine den Träger im Sinne der Andrück-Schwenkrichtung belastende Feder angeordnet ist.

Zufolge derartiger Ausgestaltung ist eine gattungsgemäße Abstreifvorrichtung von erhöhtem Gebrauchswert angegeben. Der Abstreifer kann einfach und genau auf den jeweils erforderlichen Anpreßdruck am Förderband eingestellt werden. Zu diesem Zweck ist nur die Vorspannung der zwischen Welle und Träger befindlichen Feder zu ändern. Dieses geschieht durch das Drehen der Welle über Verstellmutter und Verstellspindel. Gleichzeitig mit dem Verdrehen der Welle tritt eine Relativverlagerung zwischen Welle und Träger auf zufolge der sich verändernden Vorspannung der als Meßfeder dienenden Feder. Die mit der Welle verbundene Skalenplatte wirkt mit einem Markierungspunkt des Trägers zusammen und zeigt den jeweilig vorliegenden Anpreßdruck des Abstreifers am Förderband an. Die maximale Kraft dieser Feder ist größer als der maximale Anpreßdruck des Abstreifers am Förderband, so daß über den Meßbereich ein genaues Einstellen ermöglicht ist. Ein weiterer Vorteil ist darin zu sehen, daß diese Feder eine gewisse Federkupplung zwischen Träger und Welle darstellt, wodurch die Anpassungsfähigkeit der Abstreifvorrichtung an unterschiedliche Förderband-Konstruktionen vergrößert ist. Es können unterschiedliche Federn zum Einsatz gelangen. Bspw. ist es möglich, Druckfedern einzusetzen, die zwischen Flügeln der Welle und Träger eingeschaltet sind. Es bietet sich jedoch auch die Möglichkeit an, eine spiralförmig gewundene Blattfeder zwischen Welle und Träger einzusetzen, deren Vorspannung durch Verdrehen dieser beiden Teile gegeneinander verändert wird.

Eine vorteilhafte Weiterbildung ist darin zu sehen, daß der Träger als konzentrisch zur Welle angeordnete Büchse gestaltet ist, in deren beiden Stirnwänden Lagerbohrungen für die Welle vorgesehen sind und von deren Mantelfläche tangentenförmig eine Konsole zur Befestigung der Blattfederenden ausgeht. Diese Bauform ist sehr raumsparend. Der Innenraum der Büchse dient zur Unterbringung der Feder, wobei eine vorerwähnte spiralförmig gewundene Blattfeder günstig unterbringbar ist. Das Montieren des Blattfederpakets ist auch sehr einfach vornehmbar. Es braucht lediglich mit seinen Enden an der Konsole in üblicher Weise angeschraubt zu werden.

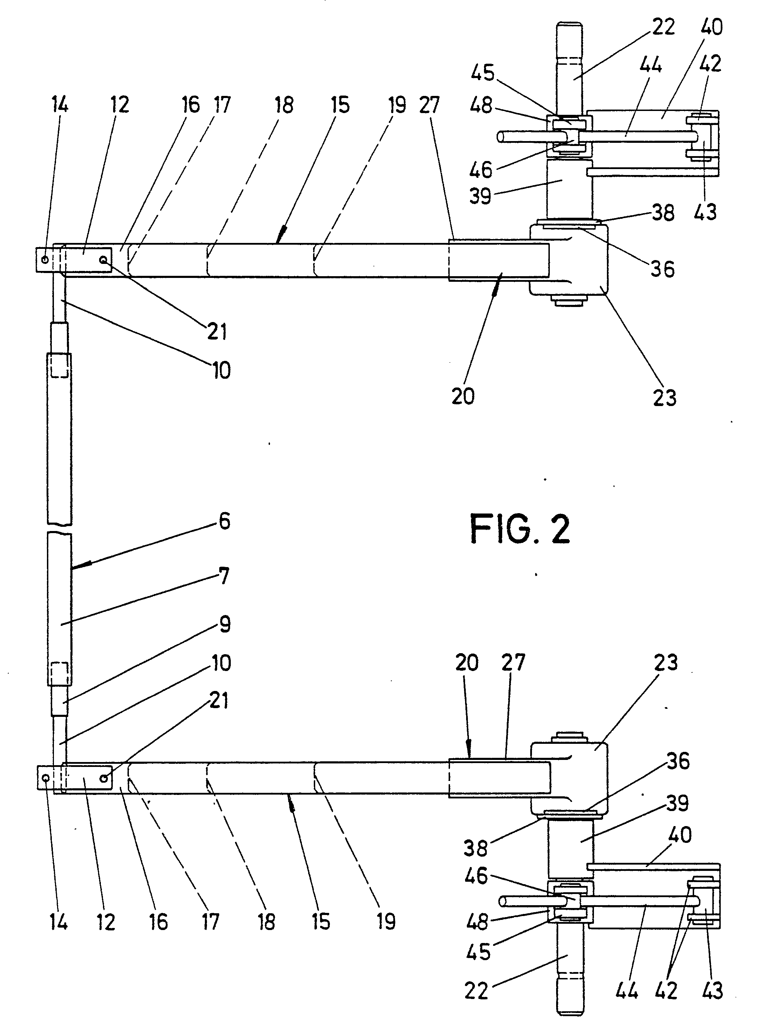

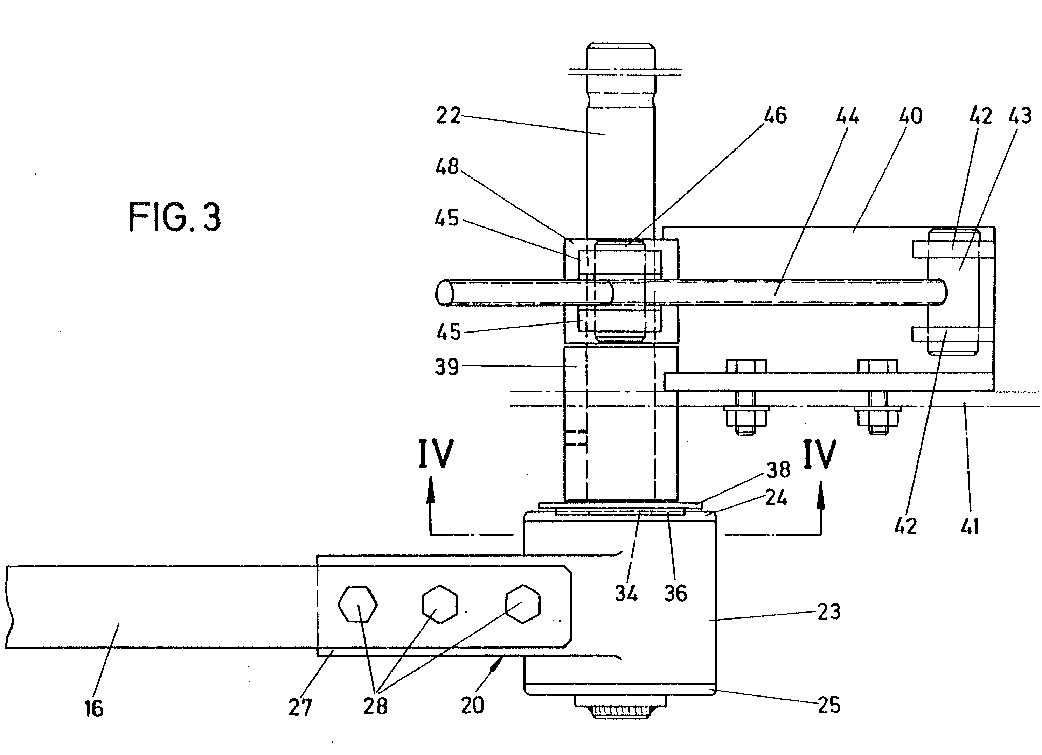

Nachstehend wird ein Ausführungsbeispiel der Erfindung anhand der Fig. 1-5 erläutert. Es zeigt

Figur 1 eine Seitenansicht einer einem Förderband zugeordneten Abstreifvorrichtung,

Figur 2 eine Draufsicht auf die Abstreifvorrichtung, wobei das Förderband nicht dargestellt ist,

Figur 3 ein Detail der Abstreifvorrichtung in Draufsicht, und zwar im Bereich einer die nicht dargestellte Feder enthaltenden Büchse,

Figur 4 den Schnitt nach der Linie IV-IV in Fig. 3 und

Figur 5 eine klappfigürliche Ansicht der Fig. 4, teilweise geschnitten dargestellt.

Ein in der Regel aus gummielastischem Material bestehendes Förderband 1 umschlingt eine Umlenkrolle 2. In paralleler Anordnung zu dieser erstreckt sich eine Spannrolle 3, so daß der von der Umlenkrolle 2 kommende Förderbandabschnitt 4 in Richtung des oberen Förderbandabschnitts 5 ansteigend verläuft.

Im Bereich zwischen Umlenkrolle 2 und Spannrolle 3 greift an der Unterseite des Förderbandabschnitts 4 ein Abstreifer 6 an. Dieser ist als Wendeabstreifer ausgebildet und besitzt zwei in einer gemeinsamen Ebene liegende Abstreiferlippen 7, 8, welche von einem mittleren Vierkantrohr 9 ausgehen. Die Abstreiferlippen 7, 8 erstrecken sich über die Breite des Förderbandes 1 und bestehen vorzugsweise aus Gummimaterial. Beim Ausführungsbeispiel befindet sich die Abstreiferlippe 7 in Einsatz. Ihre Aufgabe ist es, die das zu transportierende Material aufnehmende Fläche des Förderbandes 1 zu säubern. Endseitig setzt sich das Vierkantrohr 9 in Lagerachsstummel 10 kreisförmigen Querschnitts fort, die in Bohrungen 11 von Halteböckchen 12 eintreten. In die Bohrung 11 mündet ein von der äußeren Stirnkante des Haltebocks 12 ausgehender Querschlitz 13, quer zu welchem sich eine Spannschraube 14 erstreckt. Mittels letzterer ist es möglich, den Achsstummel 10 fest einzuspannen. Es kann demzufolge der vorschriftsmäßige Anstellwinkel der Abstreiferlippe 7 bzw. 8 zum Förderbandabschnitt 4 eingestellt werden.

Jeder Haltebock 12 wird von einem Arm 15 getragen, der von einem Paket schuppenartig angeordneter Blattfedern 16, 17, 18 und 19 unterschiedlicher Länge gebildet ist. Dabei trägt die längste dem Förderband 1 zugekehrt liegende Blattfeder 16 mit ihrem Endbereich den Haltebock 12. Zu seiner Festlegung dient eine Schraube 21. Diese längste Blattfeder 16 geht zusammen mit den restlichen Blattfedern 17, 18, 19 von einem Träger 20 aus. Im einzelnen ist der Träger 20 als konzentrisch zu einer Welle angeordnete Büchse 23 gestaltet. In deren Stirnwänden 24, 25 befinden sich miteinander fluchtende Lagerbohrungen 26 für die Welle 22. Von der Mantelfläche der Büchse 23 geht tangentenförmig eine Konsole 27 zur Befestigung der Blattfederenden mittels Schrauben 28 aus. Die drehbar zur Welle 22 angeordnete Büchse 23 formt an ihrer Innenwandung eine Radialschulter 29. An dieser stützt sich das umgebogene Ende 30 einer spiralförmig gewickelten Feder 31 ab, die von der Welle 22 durchsetzt wird. Das andere Ende 32 der Blatt-Feder 31 ist ebenfalls umgebogen und findet Abstützung an einer Radialstufe 33 der Welle 22. Diese Feder 31 steht unter Vorspannung und belastet den Träger 20 im Sinne einer Andrück-Schwenkrichtung, wobei der Abstreifer 6 gegen den Förderbandabschnitt 4 tritt.

In radialer Erstreckung geht von der Büchse 23 ein Anzeigesegment 34 mit einem Markierungsstrich 35 aus. Konzentrisch zum Anzeigesegment 34 befindet sich ein Skalensegment 36. Letzteres enthält eine mit dem Markierungsstrich 35 zusammenwirkende Skala 37. Das Skalensegment 36 sitzt seinerseits auf einer Skalenplatte 38, die von der Welle 22 durchsetzt wird und die mit dieser Welle fest verbunden ist. Eine Relativbewegung zwischen Welle 22 und Träger 20 bzw. Büchse 23 führt zu einer Verlagerung des Markierungsstriches 35 zur Skala 37 und zeigt die Vorspannung der Feder 31 an.

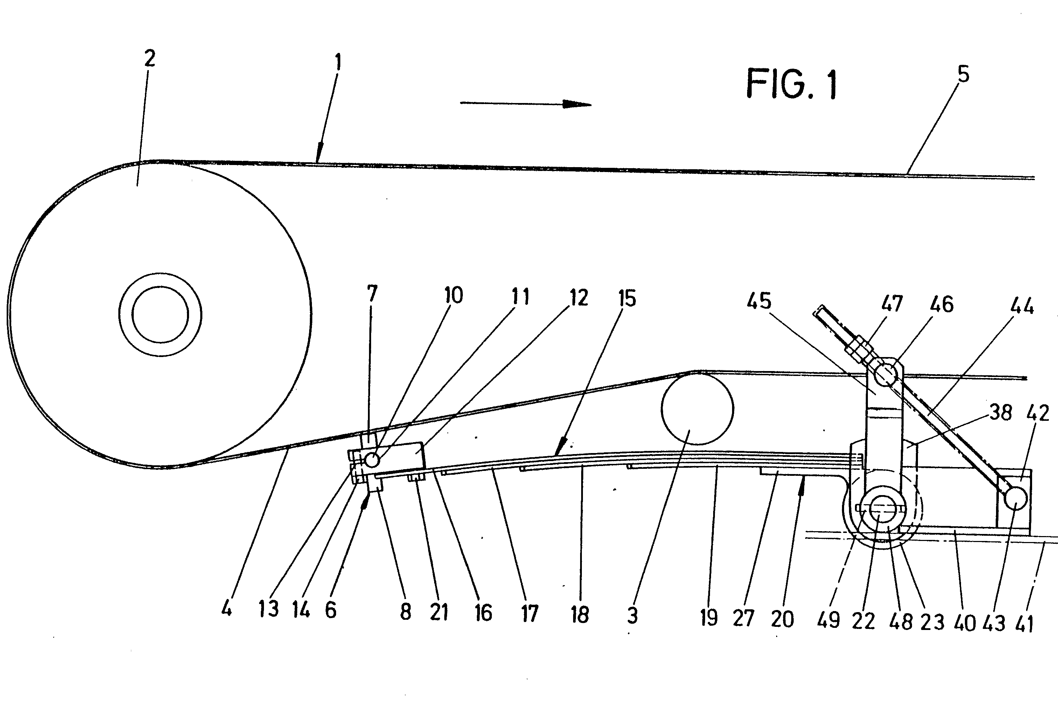

Der sich an die Büchse 23 anschließende Abschnitt der Welle 22 durchsetzt ein Lager 39. Zu dessen Halterung dient eine im Querschnitt winkelförmige Konsole 40, die am strichpunktiert dargestellten Förderbandgestell 41 angeschraubt ist. Die Konsole 40 nimmt einen doppellaschigen Stützbock 42 auf, der einen Querzapfen 43 drehbar lagert. Radial geht von dem Querzapfen 43 eine Verstellspindel 44 aus, die einen am freien Ende eines Verstellhebels 45 gelagerten Querzapfen 46 durchsetzt. Auf der mit Gewinde versehenen Verstellspindel 44 läuft eine Verstellmutter 47. Der vorerwähnte Verstellhebel 45 sitzt mittels einer Büchse 48 auf Welle 22. Ein Querstift 49 verbindet die Büchse 48 mit der Welle 22 zu einer Einheit. Wie die Fig. 1 es veranschaulicht, bilden die Querzapfen 43, 46 und die Welle 22 die Eckpunkte eines Dreiecks derart, daß die die Verstellspindel 44 darstellende Dreieckseite längenveränderbar ist.

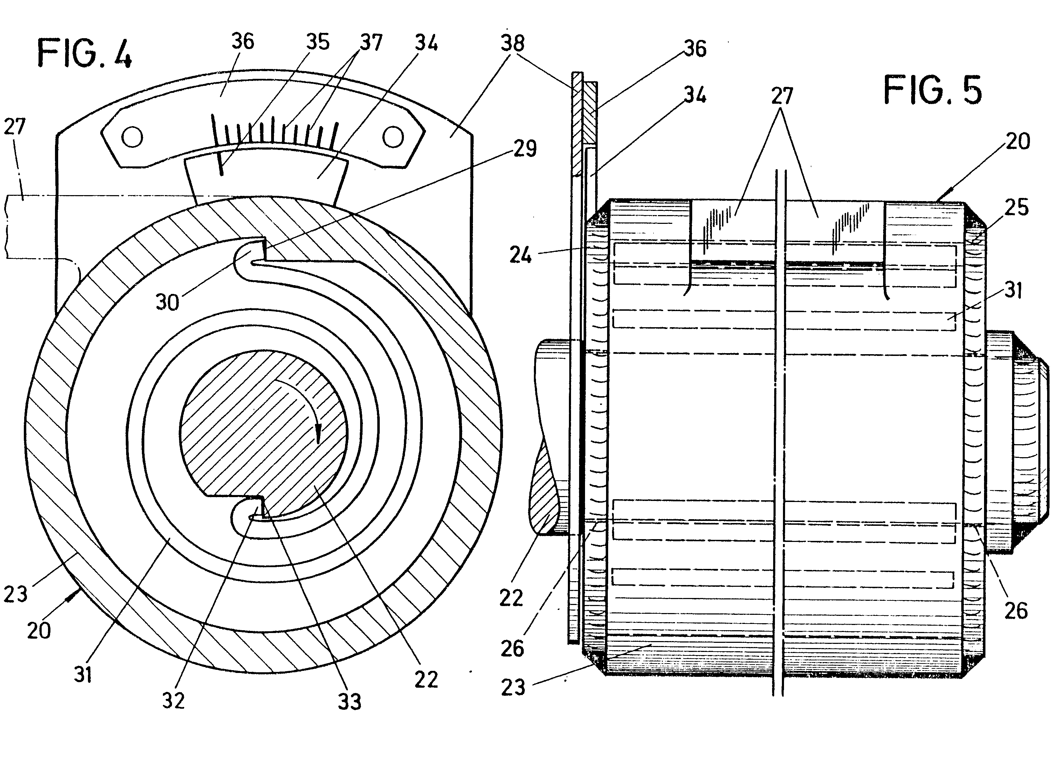

Da der Abstreifer 6 endseitig von je einem Arm 15 getragen ist und jeder Arm 15 von einem Träger 20 ausgeht, sind bei einer Änderung des Anpreßdruckes der jeweiligen Abstreiferlippe beide Verstellspindeln 44 in ihrer tragenden Länge zu verändern, und zwar mittels der Verstellmuttern 47. Zwangsläufig wird hierbei über den Verstellhebel 45 die Welle 22 gedreht. Erfolgt, wie in Fig. 4 dargestellt ist, eine Verdrehung der Welle 22 in der dortigen Pfeilrichtung, so vergrößert sich die Vorspannung der Feder 31, die die Büchse 23 bzw. den Träger 20 im Sinne der Andrück-Schwenkrichtung belastet. Bei der hierbei auftretenden Relativbewegung zwischen Welle 22 und Träger 20 bewegt sich der Markierungsstrich 35 relativ zur Skala 37 und zeigt den jeweiligen Anpreßdruck genau an. Auf diese Weise kann auf beiden Seiten des Förderbandes der angestrebte Anpreßdruck des Abstreifers leicht eingestellt werden, und zwar ohne langwierige empirische Ermittlungen.

**Patentansprüche**

1. Abstreifvorrichtung für Förderbänder, mit einem sich in Richtung der Breite des Förderbandes erstreckenden Abstreifer (6), der an in Längsrichtung des Förderbandes verlaufenden Armen (15) sitzt, die gegen die Unterseite des Förderbandes nachstellbar sind, wobei jeder Arm von einem Paket schuppenartig übereinanderliegender Blattfedern (16-19) unterschiedlicher Länge gebildet ist, von denen die längste, dem Förderband zugekehrt liegende Blattfeder (16) mit ihrem Endbereich den Haltebock für den Abstreifer (6) trägt und zusammen mit den restlichen Blattfedern von einem Träger (20) ausgeht, der durch Drehen einer Welle (22) verschwenkt, dadurch gekennzeichnet, daß zwischen der mit einer Skalenplatte (38) ausgestatteten Welle (22) und dem relativ zur Welle (22) drehbaren Träger (20) eine den Träger (20) im Sinne der Andrück-Schwenkrichtung belastende Feder (31) angeordnet ist.

2. Abstreifvorrichtung nach Anspruch 1, dadurch gekennzeichnet, daß der Träger (20) als konzentrisch zur Welle (22) angeordnete Büchse (23) gestaltet ist, in deren beiden Stirnwänden (24, 25) Lagerbohrungen (26) für die Welle (22) vorgesehen sind und von deren Mantelfläche tangentenförmig eine Konsole (27) zur Befestigung der Blattfederenden ausgeht.

**Claims**

1. A stripper mechanism for conveyor belts, having a stripper (6) which extends in the direction of the width of the conveyor belt end which is seated on arms (15) which run in the direction longitudinal to the conveyor belt and which are readjustable against the underside of the conveyor belt, each arm being formed of a packet of leaf springs (16-19) of different lengths lying one above the other like scales, the longest leaf spring (16) of which, lying next the conveyor belt, carries at its end region the mounting block for the stripper (6) and together with the remaining leaf springs extends from a bearer (20) which pivots through turning of a shaft (22), characterized in that between the shaft (22) equipped with a scaleplate (38) and the bearer (20) which may be turned relative to the shaft (22) a spring (31) is arranged to load the bearer (20) in the sense of the direction of pivoting for applying pressure.

2. A stripper mechanism as in Claim 1, characterized in that the bearer (20) is designed as a bush (23) which is arranged concentrically with the shaft (22) and in the two endwalls (24, 25) of which holes (26) are drilled, provided as bearings for the shaft (22), and from the surface of which a bracket (27) extends to form a tangent for the fastening of the ends of the leaf springs.

### Revendications

1. Dispositif de raclage pour bandes transporteuses, comportant un racleur (6) s'étendant dans le sens de la largeur de la bande transporteuse et qui est monté sur des bras (15) orientés dans la direction longitudinale de la bande transporteuse et qui sont réglables en position par rapport à la face inférieure de la bande transporteuse, chaque bras étant constitué par un paquet de lames élastiques (16 à 19) de longueurs différentes, placées l'une au-dessus de l'autre à la façon d'écailles, et dont la lame élastique la plus longue (16), tournée vers la bande transporteuse, porte par sa zone extrême le corps de palier pour le racleur (6) et fait saillie, en même temps que les lames élastiques restantes, d'un support (20) qui tourne par rotation d'un arbre (22), caractérisé en ce qu'il est prévu entre l'arbre (22) pourvu d'une plaque à échelle graduée (38) et le support (20) pouvant tourner par rapport à l'arbre (22), un ressort (31) sollicitant le support (20) dans le sens correspondant à la direction de pivotement pour application du racleur.

2. Dispositif de raclage selon la revendication 1, caractérisé en ce que le support (20) est agencé sous la forme d'un manchon (23) disposé concentriquement à l'arbre (22) et dans les deux parois frontales (24, 25) desquelles sont prévus des alésages (26) de montage de l'arbre (22) et de la surface périphérique de laquelle fait saillie, sous la forme d'une tangente, une console (27) servant à la fixation des extrémités des lames élastiques.

FIG. 1

0 157 246

FIG. 2

FIG. 3

0 157 246

FIG. 4

FIG. 5

0 157 246